# EUROPÄISCHE PATENTANMELDUNG

(11) **EP 1 818 630 A2**
(43) Veröffentlichungstag der Anmeldung: **15.08.2007**
(21) Anmeldenummer: 06025800.1
(22) Anmeldetag: 13.12.2006
(51) Int. Cl.: F25B 35/04, F28D 20/00

(54) **Sorptionsspeichereinheit für Gase**

(30) Priorität: 19.12.2005 DE 102005061121; 08.03.2006 DE 102006010636
(71) Anmelder: Blücher GmbH, 40699 Erkrath (DE)
(72) Erfinder: Kämper, Stefan, 40878 Ratingen (DE); Mierau, Kai, 40822 Mettmann (DE); Arnold, Andreas, Dr., 44269 Dortmund (DE); Heinrich, Peter, Dr., 47447 Moers (DE); Klemund, Michael, 40239 Düsseldorf (DE); de Ruiter, Ernest, Dr., 51381 Leverkusen (DE)
(74) Vertreter: Gesthuysen, von Rohr & Eggert

(57) **Zusammenfassung**

Die vorliegende Erfindung betrifft eine Speichereinheit für Gase, insbesondere einen Sorptionsspeicher, wobei die Speichereinheit ein Sorptionsmittel zur reversiblen Aufnahme der zu speichernden Gase aufweist, wobei das Sorptionsmittel auf Basis diskreter Sorptionspartikel ausgebildet ist. Die Sorptionspartikel sind in einen festen gasdurchlässigen dreidimensionalen Träger mit Schaumstruktur eingelagert bzw. hieran fixiert. Die Speichereinheit eignet sich insbesondere zur Speicherung brennbarer bzw. fossiler Gase, wie Wasserstoff, Erdgas und dergleichen, und somit als Gasspeichereinheit in Kraftwerken und Kraftfahrzeugen.

## Beschreibung

Die vorliegende Erfindung betrifft das technische Gebiet der Speicherung von Gasen. Insbesondere betrifft die vorliegende Erfindung eine Speichereinheit für Gase, insbesondere einen Sorptionsspeicher, sowie deren Verwendung, Weiterhin betrifft die vorliegende Erfindung die Verwendung eines festen gasdurchlässigen dreidimensionalen Trägers mit Schaumstruktur zur reversiblen Speicherung, insbesondere Sorptionsspeicherung, von Gasen.

Für eine Vielzahl von Anwendungen ist es notwendig, Gase zu speichern, insbesondere reversibel zu speichern, damit sie bedarfsweise wieder freigesetzt werden können. Die Speicherung von Gasen sollte bei diesen Anwendungen mit größtmöglicher Dichte erfolgen.

Nach dem Stand der Technik verwendet man poröse Materialien in Schüttungen, um diese Gase zu speichern. Dies ist allerdings mit einer Vielzahl von Nachteilen verbunden: Schüttungen poröser Materialien sind nur sehr schwierig gleichmäßig handhabbar. Da diese Schüttungen sehr dicht sind, ist die gleichförmige Beladung in kurzer Zeit meist nicht möglich. Auch die bedarfsweise Entladung von in Schüttungen poröser Materialien gespeicherten Gasen ist nicht unproblematisch und insbesondere mit einem längeren Zeitaufwand verbunden. Ein weiterer Nachteil von Schüttungen liegt darin, daß während der Beladung Gassenbildungen auftreten können, so daß das Speichermaterial für die Gase nicht vollständig oder nicht gleichmäßig zur Speicherung der Gase ausgenutzt wird. Auch ist der durch die Dichte der Schüttung beim Beladungsvorgang eintretende Druckverlust ein nur schwierig zu handhabbarendes Problem.

Sorptionsspeicher als Speichereinheit für Energie bzw. Gase auf der Basis von Schüttungen geeigneter Sorptionsmaterialien sind aus dem Stand der Technik bekannt. Diese gehen allerdings sämtlich von Schüttungen von Sorptionsteilchen aus (vgl. DE 199 63 322 A1, DE 198 11 302 A1, DE 100 06 825 A1 und DE 35 32 093 C1). Mit diesen Sorptionsspeichereinrichtungen sind aber die vorgenannten Probleme verbunden.

Eine Aufgabe der vorliegenden Erfindung liegt folglich darin, eine Speichereinheit für Gase, insbesondere einen Sorptionsspeicher, bereitzustellen, welche die zuvor geschilderten Nachteile des Standes der Technik zumindest weitgehend vermeidet oder aber wenigstens abschwächt. Insbesondere sollte sich eine solche Speichereinheit für die reversible Speicherung verschiedenster Gase, wie z. B. Wasserstoff, Erdgas, kohlenwasserstoffbasierter Gase etc., eignen.

Das zuvor geschilderte Problem wird im Rahmen der vorliegenden Erfindung durch eine Speichereinheit für Gase, insbesondere einen Sorptionsspeicher, nach Anspruch 1 gelöst. Weitere, vorteilhafte Ausgestaltungen der erfindungsgemäßen Speichereinheit sind Gegenstand der diesbezüglichen Unteransprüche.

Weiterer Gegenstand der vorliegenden Erfindung ist die Verwendung der erfindungsgemäßen Gasspeichereinheit gemäß den Ansprüchen 18 und 19.

Schließlich ist Gegenstand der vorliegenden Erfindung die Verwendung eines festen gastdurchlässigen dreidimensionalen Trägers mit Schaumstruktur zur reversiblen Speicherung, insbesondere Sorptionsspeicherung, von Gasen gemäß Anspruch 20.

Gegenstand der vorliegenden Erfindung - gemäß einem ersten Aspekt der vorliegenden Erfindung - ist somit eine Speichereinheit für Gase bzw eine Einheit zur reversiblen Speicherung von Gasen, insbesondere ein Sorptionsspeicher, wobei die Speichereinheit ein Sorptionsmittel zur reversiblen Aufnahme der zu speichernden Gase aufweist, wobei das Sorptionsmittel auf Basis diskreter Sorptionspartikel ausgebildet ist. Eine Besonderheit der vorliegenden Erfindung ist insbesondere darin zu sehen, daß die Sorptionspartikel in einen festen gasdurchlässigen dreidimensionalen Träger mit Schaumstruktur eingelagert sind und/oder hieran fixiert sind. Mit anderen Worten ist der feste gasdurchlässige dreidimensionale Träger mit Schaumstruktur mit den diskreten als Sorptionsmittel dienenden Sorptionspartikeln beladen.

Das erfindungsgemäß eingesetzte Sorptionsmittel ist in der Lage, die zu speichernden Gase reversibel aufzunehmen bzw. reversibel zu sorbieren, insbesondere zu ad- und/oder absorbieren, vorzugsweise zu adsorbieren, und bedarfsweise im Falle der Entladung wieder freizusetzen, insbesondere mittels Desorption. Daher wird im Rahmen der vorliegenden Erfindung der Begriff der Reversibilität in bezug auf die Gasspeicherung verwendet.

Der Begriff der Sorption bezieht sich im Rahmen der vorliegenden Erfindung auf eine Sammelbezeichnung für alle Vorgänge, bei denen ein Stoff durch einen anderen mit ihm in Berührung stehenden Stoff aufgenommen wird, im vorliegenden Fall das Gas durch das Sorptionsmittel. Beispiele sind Adsorption, Absorption, Chemisorption und Physisorption, Persorption, Resorption etc. Der umgekehrte Vorgang wird erfindungsgemäß als Desorption bezeichnet. Die sorbierte Substanz wird dabei als Sorbat und die sorbierend wirkende Substanz dabei als Sorbens oder Sorptionsmittel bezeichnet. Erfindungsgemäß bevorzugt erfolgt die Sorption mittels Ad- und/oder Absorption, vorzugsweise mittels Adsorption.

Für weitere Einzelheiten zum Begriff der Sorption sowie der Adsorption, Absorption, Desorption etc. kann auf Römpp Chemielexikon, 10. Auflage, Georg Thieme Verlag, Stuttgart/New York, dort die diesbezüglichen Stichworte: "Sorption", "Adsorption", "Absorption" und "Desorption", sowie die dort jeweils referierte Literatur verwiesen werden.

Wie zuvor beschrieben, ist eine Besonderheit der vorliegenden Erfindung darin zu sehen, daß eine Trägerstruktur auf Basis eines Schaums verwendet wird, der mit den Sorptionspartikeln beladen ist. Unter dem Begriff des Schaums wird im Rahmen der vorliegenden Erfindung ein Gebilde aus im Gebrauchszustand gasgefüllten, kugel- oder polyederförmigen Zellen, welche durch feste Zellstege begrenzt und voneinander getrennt werden, bezeichnet. Die Zellstege, welche selbst über sogenannte Knotenpunkte verbunden sind, bilden dabei ein zusammenhängendes Gerüst. Zwischen den Zellstegen können sich sogenannte Schaumlamellen spannen (= geschlossenzelliger oder geschlossenporiger Schaum), die im Falle von offenzelligen bzw. offenporigen Schäumen zumindest teilweise zerstört sind. Für weitere Einzelheiten zum Begriff des Schaums kann auf Römpp Chemielexikon, 10. Auflage, Georg Thieme Verlag, Stuttgart/New York , Stichwort: "Schaum", sowie die dort referierte Literatur verwiesen werden.

Gemäß einer erfindungsgemäß bevorzugten Ausführungsform kann als Träger für die Sorptionspartikel ein offenporiger und/oder offenzelliger Schaum, insbesondere Schaumstoff, verwendet werden. Erfindungsgemäß besonders bevorzugt wird ein offenporiger und/oder offenzelliger Schaumstoff verwendet.

Unter dem Begriff des Schaumstoffs werden erfindungsgemäß insbesondere Werkstoffe mit über ihre ganze Masse verteilten, bevorzugterweise offenen Zellen bzw. Poren mit einer Rohdichte, die niedriger ist als die der Gerüst- bzw. Schaumsubstanz, verstanden. Als Gerüstsubstanz können sowohl organische Polymere (z. B. Schaumkunststoffe) als auch anorganische Materialien (z. B. Schaumglas, Schaummetalle etc.) fungieren.

Die Schaumstoffe können dabei nach DIN 7726 (Mai 1982) in Hartschaumstoffe, halbharte Schaumstoffe, Weichschaumstoffe, elastische Schaumstoffe und weichelastische Schaumstoffe in Abhängigkeit ihres Verfbrmungswiderstands bei Druckbelastung unterteilt werden: Elastische Schaumstoffe sind solche, die bei Druckverformung nach DIN 53580 bis zu 50 % ihrer Dicke keine verbleibende Verformung von mehr als 2 % ihres Ausgangsvolumens aufweisen. Hartschaumstoffe dagegen sind nach DIN 7726 (Mai 1982) Schaumstoffe, die bei einer Verformung unter Druckbelastung einen relativ hohen Widerstand entgegensetzen (Druckspannung bei 10 % Stauchung bzw. Druckfestigkeit nach DIN 53421, Juni 1984, ≥ 80 kPa).

Weitere Einteilungen der Schaumstoffe erfolgen unter anderem nach der Gerüstsubstanz (Polyurethanschäurne, Polystyrolschäume, Polyolefinschäume, Polyvinylchloridschäume etc.), der Werkstoffklasse der Gerüstsubstanz (elastomere Schaumstoffe, thermoelastomere Schaumstoffe, thermoplastische Schaumstoffe etc.), der Art, der Größe und der Form der Schaumstoffzellen (offenzellige Schaumstoffe, geschlossenzellige Schaumstoffe, gemischtzellige Schaumstoffe, grob- und feinzellige Schaumstoffe, Kugelschaumstoffe, Wabenschaumstoffe, doppelschichtige bzw. echte Schaumstoffe und einschichtige bzw. unechte Schaumstoffe etc.), nach der Dichte (leichte Schaumstoffe mit Dichten ≤ 100 kg/m³ und schwere Schaumstoffe mit Dichten ≥ 100 kg/m³) oder der Dichteverteilung (Struktur- oder Integralschaumstoffe).

Für weitere Einzelheiten zu dem Begriff des Schaumstoffs kann verwiesen werden auf Römpp Chemielexikon, 10. Auflage, Georg Thieme Verlag, Stuttgart/New York, Stichworte: "Schaumstoffe", "Hartschaumstoffe", "Weichschauanstoffe", "Integralschaumstoffe" und "Schaum", sowie die dort jeweils referierte Literatur.

Wie zuvor beschrieben wird erfindungsgemäß als Träger für das Sorptionsmittel ein insbesondere offenporiger und/oder offenzelliger Schaum bzw. Schaumstoff verwendet. Bevorzugt wird ein Schaumstoff auf Basis mindestens eines organischen Polymers, insbesondere auf Basis von Polyurethanen, Polyolefinen, Polystyrolen, Polyvinylchloriden, Polyisocyanuraten und Formaldehydharzen, besonders bevorzugt auf Basis von Polyurethanen, eingesetzt. In erfindungsgemäß besonders bevorzugter Weise ist der eingesetzte Träger auf Grundlage eines offenporigen und/oder offenzelligen Schaumstoffs auf Polyurethanbasis ausgebildet, insbesondere auf Basis eines Polyurethanweichschaumstoffs.

Im allgemeinen wird zur reversiblen Speicherung der Gase die dreidimensionale Trägerstruktur mit den hieran befestigten Sorptionspartikeln auf sehr tiefe Temperaturen, insbesondere auf Temperaturen des flüssigen Stickstoffs (-195,8 °C bei Atmospärendruck) oder tiefer abgekühlt und im Falle der bedarfsweisen Freisetzung wieder auf höhere Temperaturen gebracht. Dieser Vorgang ist dem Fachmann jedoch als solcher bekannt, so daß hierauf nicht näher eingegangen zu werden braucht.

Gemäß einer erfindungsgemäß besonders bevorzugten Ausführungsform ist der Träger für die Sorptionspartikel nach seiner Beladung mit den Sorptionspartikeln komprimiert, insbesondere um das 1,2fache bis 3,0fache seines Ausgangsvolumens. Vorzugsweise ist zu diesem Zweck der Träger ein komprimierbarer Schaum, insbesondere Schaumstoff, vorzugsweise ein Weichschaumstoff, und in erfindungsgemäß besonders bevorzugter Ausführungsform ein Polyurethanschaumscoff, der nach seiner Beladung mit den Sorptionspartikeln komprimiert ist, insbesondere um das 1,2fache bis 3,0fache seines Ausgangsvolumens. Durch die Komprimierung gelingt es, das Flächengewicht und damit das Raumgewicht um den entsprechenden Kompressionsfaktor zu steigern. Somit werden erstmals Strukturen geschaffen, die eine Dichte nahe einer Schüttung aufweisen, jedoch noch ausreichend gasdurchlässig sind, so daß ein effizienter Transport von Gasen zwischen den Sorptionspartikeln möglich ist.

Die offenen Trägerstrukturen ergeben im Rahmen der vorliegenden Erfindung einen wesentlich beschleunigten Beladungs- und Entladungsvorgang, was ein großer Vorteil ist.

Der komprimierte Zustand des Trägers, insbesondere Schaums bzw. Schaumstoffs, kann beispielsweise durch den Behälter bzw. Tank der erfindungsgemäßen Speichereinheit aufrechterhalten werden. Alternativ und erfindungsgemäß bevorzugt ist der komprimierte Zustand des Trägers, insbesondere Schaums bzw. Schaumstoffs, jedoch durch nachfolgende, insbesondere thermische bzw. chemische Aushärtung aufrechterhalten. Zu diesem Zweck können Schaum- bzw. Schaumstoffinaterialien verwendet werden, die durch Erwärmung nach dem Kompressionsvorgang thermisch aushärten. In erfindungsgemäß bevorzugter Weise wird der Träger, d. h. der Schaum bzw. Schaumstoff, jedoch mit einem chemischen Aushärtungsmittel getränkt und nachfolgend ausgehärtet, wobei das Aushärtungsmittel vorteilhafterweise ein Klebstoff oder eine anderweitige Haftmasse ist, welche gleichermaßen zur Fixierung der Sorptionspartikel dient. Auf diese Weise können die Sorptionspartikel mittels einer Haftmasse, insbesondere eines Klebstoffs, an den Träger fixiert werden.

Zu diesen Zweck kann der Schaum bzw. Schaumstoff mit dem Klebstoff bzw. der Haftmasse getränkt bzw. beaufschlagt und nachfolgend mit den Sorptionspartikeln beladen werden, welche mittels des Klebstoffs bzw. der Haftmasse an dem Träger fixiert werden, und schließlich komprimiert und im komprimierten Zustand erwärmt bzw. ausgehärtet werden. Überschüssiger Klebstoff kann dabei vor dem Erwärmungsvorgang - und zwar entweder unmittelbar nach Beladung mit dem Klebstoff oder aber nach Beladung mit dem Sorptionsmittel - vom Schaum bzw. Schaumstoff entfernt werden, z. B. mittels Abquetschen des Schaums (z. B. durch Kalandrieren).

Im allgemeinen werden als Sorptionsmittel poröse Sorptionspartikel eingesetzt, d. h. Sorptionspartikel, welche Poren zur reversiblen Aufnahme und/oder Speicherung von Gasen aufweisen. Insbesondere sind diese Sorptionspartikel in der Lage, die zu speichernden Gase reversibel adsorptiv und/oder absorptiv, vorzugsweise adsorptiv, aufzunehmen bzw. reversibel zu speichern und bedarfsweise, insbesondere temperaturabhängig, wieder freizusetzen, insbesondere zu desorbieren.

Was die Sorptionspartikel als solche anbelangt, so weisen diese also eine poröse Struktur auf. Erfindungsgemäß werden bevorzugt kornförmige, besondere bevorzugt kugelförmige Sorptionspartikel eingesetzt.

Erfindungsgemäß bevorzugt werden dabei Sorptionspartikel mit mittleren Partikeldurchmessern im Bereich von 0,01 bis 2,0 mm, insbesondere 0,05 bis 1,0 mm, vorzugsweise 0,1 bis 1,0 mm, eingesetzt.

Das Sorptionsmittel kann dabei insbesondere ausgewählt sein aus der Gruppe von Aktivkohle; Zeolithen; anorganischen Oxiden, insbesondere Siliciumdioxiden, Silicagelen und Aluminiumoxiden; Molekularsieben; mineralischen Granulaten; Klathraten; sowie deren Mischungen. Als Sorptionsmittel besonders bevorzugt ist Aktivkohle, die sich im Rahmen der vorliegenden Erfindung als Sorptionsmittel besonders bewährt hat.

Zur effizienten Gasspeicherung sollte das Sorptionsmittel, insbesondere die Aktivkohle, eine hohe spezifische Oberfläche (BET-Oberfläche) aufweisen. Erfindungsgemäß bevorzugt sollte die spezifische Oberfläche des Sorptionsmittels, insbesondere der Aktivkohle, mindestens 500 m²/g, vorzugsweise mindestens 750 m²/g, besonders bevorzugt mindestens 1,000 m²/g, ganz besonders bevorzugt mindestens 1,200 m²/g, aufweisen. Im allgemeinen liegt die spezifische Oberfläche (BET-Oberfläche) des eingesetzten Sorptionsmittels, insbesondere der Aktivkohle, im Bereich von 500 bis 2.500 m²/g, insbesondere 750 bis 2.250 m²/g, vorzugsweise 900 bis 2.000 m²/g, besonders bevorzugt 1.000 bis 1.750 m²/g. Sorptionsmittel mit den vorgenannten BET-Oberflächen sind besondere geeignet, eine große Menge der zu speichernden Gase in relativ kurzer Zeit aufzunehmen bzw. adsorptiv zu binden.

Zur BET-Methode kann beispielsweise verwiesen werden auf Römpp Chemielexikon, 10. Auflage, Georg Thieme Verlag, Stuttgart/New York, Stichwort: "BBT-Methode", sowie die dort referierte Literatur, Winnacker-Küchler (3. Auflage), Band 7, Seiten 93 ff: sowie Z. Anal. Chem. 238, Seiten 187 bis 193 (1968).

Um auch mechanischen Belastungen standhalten zu können, sollten die Sorptionsparükel, insbesondere die Aktivkohlepartikel, vorzugsweise die Aktivkohlekörner oder Aktivkohlekügelchen, einen Berstdruck von mindestens 5 Newton, insbesondere einen Berstdruck im Bereich von 5 Newton bis 20 Newton, pro Partikel aufweisen.

Die Anmelderin hat herausgefunden, daß als Sorptionsmittel, insbesondere als Aktivkohle, insbesondere Partikel mit einem großen Mikroporenvolumenanteil, bezogen auf das Gesamtporenvolumen des Sorptionsmittels, geeignet sind. Im Rahmen der vorliegenden Erfindung wird unter dem Mikroporenvolumen dasjenige Porenvolumen verstanden, welches durch Poren mit einem Porendurchmesser ≤ 25 Å (2,5 nm), insbesondere ≤ 20 Å (2,0 nm), bereitgestellt wird. Die Anmelderin hat überraschenderweise herausgefunden, daß die Gasspeicherung besonders effizient ist, wenn der Mikroporenvolumenanteil des Sorptionsmittels besonders hoch ist. Ohne sich auf eine bestimmte Theorie festlegen zu wollen, läßt sich die besonders gute Gasspeicherung mit Sorptionsmitteln, insbesondere Aktivkohle, mit großem Mikroporenvolumenanteil darauf zurückführen, daß die Mikroporen aufgrund ihrer nur geringen Größe sozusagen von allen Seiten bzw. Wandungen mit den zu sorbierenden bzw. adsorbierenden Gasmolekülen in Wechselwirkung treten können.

Die Anmelderin hat überraschenderweise herausgefunden, daß insbesondere bei Sorptionsmitteln, vorzugsweise Aktivkohle, mit großem Mikroporenvolumenanteil, die Speicherung in bezug auf Wasserstoff in effizienter Weise bereits bei relativ hohen Temperaturen oberhalb des Siedepunkts des Wasserstoffs (-252,77 °C bei Atmosphärendruck) erfolgen kann, nämlich insbesondere bereits bei Temperaturen des flüssigen Stickstoffs (-195,8 °C bei Atmosphärendruck).

In erfindungsgemäß bevorzugter Ausführungsform wird als Sorptionsmittel also Aktivkohle in Form von Aktivkohlekörnern, vorzugsweise Aktivkohlekügelchen, insbesondere mit mittleren Teilchendurchmessem im Bereich von 0,01 bis 2,0 mm, insbesondere 0,05 bis 1,0 mm, vorzugsweise 0,1 bis 1,0 mm, verwendet.

Nachfolgend werden die physikalisch-chemischen Eigenschaften - neben den vorstehend genannten Vorraussetzungen - einer erfindungsgemäßen als Sorptionsmittel besonders bevorzugt eingesetzten Aktivkohle beschrieben wobei sich die nachfolgend angegebenen physikalisch-chemischen Eigenschaften, sofern nichts anderes angegeben ist, auf Porendurchmesser bis 400 Å beziehen.

So weist eine als Sorptionsmittel bevorzugt eingesetzte Aktivkohle neben den übrigen vorgenannten Eigenschaften vorteilhafterweise ein Adsorptionsvolumen V_{ads} von mindestens 250 cm³/g, insbesondere mindestens 300 cm³/g, vorzugsweise mindestens 350 cm³/g, besonders bevorzugt 400 cm³/g, auf. Im allgemeinen liegt das Adsorptionsvolumen V_{ads} im Bereich von 250 bis 1.000 cm³/g, insbesondere 300 bis 900 cm³/g, vorzugsweise 350 bis 750 m³/g. Die vorgenannten Angaben beziehen sich auf einen Partialmeßdruck p/p₀ von 0,995.

Die erfindungsgemäß bevorzugt eingesetzte Aktivkohle weist insbesondere ein Gesamtporenvolumen nach Gurvich von mindestens 0,05 cm³/g, insbesondere mindestens 0,55 cm³/g, vorzugsweise mindestens 0,60 cm³/g, besonders bevorzugt mindestens 0,65 cm³/g, ganz besonderes bevorzugt mindestens 0,7 cm³/g, auf. Im allgemeinen liegt das Gesamtporenvolumen nach Gurvich der bevorzugt eingesetzten Aktivkohle im Bereich von 0,50 bis 0,90 cm³/g, insbesondere 0,55 bis 0,85 cm³/g, vorzugsweise 0,60 bis 0,80 cm³/g, besonders bevorzugt 0,65 bis 0,80 cm³/g, ganz besonders bevorzugt 0,70 bis 0,75 cm³/g.

Zu weiteren Einzelheiten bezüglich der Bestimmung des Gesamtporenvolumens nach Gurvich kann verwiesen werden auf L, Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Wie zuvor beschrieben, ist der Mikroporenvolumenanteil der erfindungsgemäß bevorzugt eingesetzten Aktivkohle besonders hoch. Insbesondere liegt der Mikroporenvolumenanteil (d. h. der Volumenanteil, der auf Poren mit Porendurchmessem von ≤ 25 Å, vorzugsweise ≤ 20 Å, zurückgeht), bezogen auf das Gesamtporenvolumen der Aktivkohle, bei mindestens 60 %, insbesondere mindestens 65 %, bevorzugt mindestens 70 %, Im allgemeinen liegt der Mikroporenvolumenanteil der eingesetzten Aktivkohle, bezogen auf das Gesamtporenvolumen der Aktivkohle, im Bereich von 60 bis 95 %, insbesondere 65 bis 90 %, vorzugsweise 70 bis 85 %. Eine derart mikroporöse Aktivkohle eignet sich zur Speicherung von Gasen, insbesondere von Wasserstoff, in besonders geeigneter Weise.

Eine erfindungsgemäß bevorzugt eingesetzte Aktivkohle weist ein Mikroporenvolumen, d. h. ein aus Poren mit Porendurchmessern ≤ 25 Å, vorzugsweise ≤ 20 Å, gebildetes Mikroporenvolumen, nach Carbon Black von mindestens 0,40 cm³/g, insbesondere mindestens 0,45 cm³/g, vorzugsweise mindestens 0,50 cm³/g, auf. Im allgemeinen liegt dieses Mikroporenvolumen nach Carbon Black im Bereich von 0,40 bis 0,8 cm³/g, insbesondere 0,45 bis 0,75 cm³/g, vorzugsweise 0,50 bis 0,6 cm³/g.

Zu weiteren Einzelheiten der Bestimmung der Porenoberfläche nach Carbon Black kann beispielsweise verwiesen werden auf R. W. Magee, Evaluation of the External Surface Area of Carbon Black by Nitrogen Adsorption, Presented at the Meeting of the Rubber Division of the American Chem. Soc., Oktober 1994, z. B. referiert in: Quantachrome Instruments, AUTOSORB-1, AS1 Win Version 1,50, Operating Manual, P/N 05061, Quantachrome Instruments 2004, Florida, USA, Seiten 71 ff.

Aufgrund der hohen Mikroporösität der erfindungsgemäß bevorzugt als Sorptionsmittel eingesetzten Aktivkohle weist diese gleichermaßen einen hohen spezifischen Mikroporenoberflächenanteil auf. Der spezifische Mikroporenoberflächenanteil (d. h. der Oberflächenanteil, der auf Poren mit Porendurchmessern von ≤ 25 Å, vorzugsweise ≤ 20 Å, zurückgeht) beträgt mindestens 70 %, insbesondere mindestens 75 %, bevorzugt mindestens 80 %, ganz besonders bevorzugt mindestens 85 %, bezogen auf die spezifische Gesamtoberfläche (BET) der Aktivkohle. Insbesondere liegt der Mikroporenoberflächenanteil im Bereich von 70 bis 95 %, insbesondere 75 bis 95 %, vorzugsweise 80 bis 90 %.

Die erfindungsgemäß bevorzugt als Sorptionsmittel eingesetzte Aktivkohle weist aufgrund ihrer Mikroporösität eine große Mikroporenoberfläche auf. Insbesondere liegt die Mikroporenoberfläche nach Carbon Black (d. h. die aus Poren mit Porendurchmessern von ≤ 25 Å, vorzugsweise ≤ 20 Å, gebildete Mikroporenoberfläche) bei mindestens 400 m²/g, insbesondere mindestens 800 m²/g, vorzugsweise mindestens 1.000 m²/g, besonders bevorzugt mindestens 1.200 m²/g. Gemäß einer bevorzugten Ausführungsform liegt die Mikroporenoberfläche der eingesetzten Aktivkohle im Bereich von 400 bis 1,750 m²/g, insbesondere 800 bis 1.500 m²/g, vorzugsweise 1.000 bis 1.400 m²/g, besonders bevorzugt 1.100 bis 1.300 g m²/g.

Erfindungsgemäß bevorzugt wird als Sorptionsmittel eine mikroporöse Aktivkohle mit einem mittleren Porendurchmesser (Durchschnittsporendurchmesser) von höchstens 35 Å, vorzugsweise höchstens 30 Å, besonders bevorzugt höchstens 25 Å eingesetzt. Insbesondere liegt der mittlere Porendurchmesser der als Sorptionsmittel eingesetzten Aktivkohle im Bereich von 15 bis 35 Å, insbesondere 15 bis 30 Å, vorzugsweise 15 bis 25 Å.

Was die erfindungsgemäß als Sorptionsmittel eingesetzte Aktivkohle anbelangt, so liegt deren Rohdichte im allgemeinen im Bereich von 700 bis 975 g/cm³, insbesondere 750 bis 950 g/cm³, vorzugsweise 800 bis 900 g/cm³,

Für eine besonders gute Speicherleistung ist es von Vorteil, wenn die Gesamtporosität des Sorptionsmittels, insbesondere der als Sorptionsmittel bevorzugt eingesetzten Aktivkohle, im Bereich von 40 bis 70 %, insbesondere 45 bis 65 %, vorzugsweise 50 bis 60 %, liegt.

Erfindungsgemäß bevorzugt wird als Sorptionsmittel eine Aktivkohle mit einem spezifischen Gesamtporenvolumen im Bereich von 0,1 bis 2,5 cm³/g, insbesondere 0,2 bis 2,0 cm³/g, vorzugsweise 0,3 bis 1,5 cm³/g, besonders bevorzugt 0,4 bis 1,0 cm³/g, eingesetzt. Dabei liegt der Anteil an Porendurchmessern ≤ 36 Å bei mindestens 65 %, insbesondere mindestens 70 %, vorzugsweise mindestens 75 %, und kann Werte bis zu 95 %, insbesondere bis zu 90 %, erreichen.

Eine als Sorptionsmittel erfindungsgemäß besonders geeignete Aktivkohle, welche die vorgenannten Eigenschaften und Spezifikationen erfüllt, wird beispielsweise von der Blücher GmbH, Erkrath, Deutschland, oder der Adsor-Tech GmbH, Premnitz, Deutschland, vertrieben.

Die Menge, in der der Träger das Sorptionsmittel, insbesondere die Aktivkohle enthält, kann in weiten Bereichen variieren. Im allgemeinen beträgt die Beladungsmenge des Trägers mit Sorptionsmittel 0,01 bis 1 g/cm³, vorzugsweise 0,1 bis 0,6 g/cm³. Dennoch kann es einzelfallbedingt oder anwendungsbezogen erforderlich sein, von den vorgenannten Werten abzuweichen.

Wie zuvor beschrieben, kann die erfindungsgemäße Speichereinheit zur reversiblen Speicherung von Gasen beliebiger Art verwendet werden, so z. B. zur Speicherung von brennbaren Gasen oder Heizgasen, wie Erdgas, Wasserstoff, Kohlenwasserstoffgasen (z. B. Methan und Ethan) oder dergleichen.

Insbesondere kann die erfindungsgemäße Speichereinheit als Energiespeicher, insbesondere Gasspeicher, für Kraftfahrzeuge, Verbrennungsmotoren beliebiger Art und Kraftwerke verwendet werden.

Aufgrund des Vorhandenseins des dreidimensionalen Trägers mit Schaumstruktur, an dem die diskreten Sorptionspartikel fixiert sind, gelingt es, eine gasdurchlässige Struktur zu schaffen, so daß sowohl beim Beladungsprozeß (Sorptionsprozeß) als auch beim Entladungsprozeß (Desorption) ein effizienter Transport zwischen den Sorptionspartikeln möglich ist. Durch Komprimierung (z. B. thermische Komprimierung) des Trägers im Herstellungsprozeß gelingt es zudem, das Flächengewicht und damit das Raumgewicht der Trägerstruktur um das 1,2fache bis 3fache zu steigern; auf diese Weise können erstmals Strukturen geschaffen werden für eine derartige Speichereinheit, die eine Dichte nahe einer Schüttung aufweisen, jedoch ausreichend gasdurchlässig sind, um einen effizienten Transport zwischen den Sorptionspartikeln zu ermöglichen. Die offenen Strukturen ergeben ein wesentlich beschleunigten Beladungs- und Entladungsvorgang, was von großem Vorteil ist, z. B. bei der Nutzung als Erdgas- oder Wasserstoffspeicher bei tiefen Temperaturen.

Wenn als Sorptionsmittel insbesondere eine mikroporöse Aktivkohle der zuvor definierten Art verwendet wird, läßt sich die Effizienz der erfindungsgemäßen Speichereinheit in besonderem Maße steigern; Die Anmelderin hat überraschender Weise herausgefunden, daß eine Aktivkohle mit relativ großer spezifischer Oberfläche (BET-Oberfläche) bei gleichzeitig relativ großem Mikroporenvolumenanteil eine besonders effiziente Speicherung, beispielsweise von Wasserstoff, ermöglicht, und dies bei relativ hohen Temperaturen, nämlich denen von flüssigem Stickstoff, die mehr als 50 °C oberhalb von der Temperatur von flüssigem Wasserstoff liegen.

Üblicherweise weist die Speichereinheit zudem ein verschließbares, insbesondere hermetisch verschließbares Behältnis, insbesondere einen Tank, zur Aufnahme des mit den Sorptionspartikeln beladenen Trägers auf. Mit anderen Worten befindet sich im Gebrauchszustand das eigentliche Speichermedium (d. h. der mit Sorptionspartikeln beladene Träger mit Schaumstruktur) in einem Behältnis bzw. Tank. Im allgemeinen ist die Speichereinheit bzw. das Behältnis, insbesondere der Tank, thermisch isoliert oder thermisch isolierbar ausgebildet. Vorteilhafterweise ist die Speichereinheit bzw. das Behältnis, insbesondere der Tank, kühlbar ausgebildet. Weiterhin weist die Speichereinheit bzw. das Behältnis mindestens einen Einlaß und mindestens einen Auslaß für die zu speichernden und wieder freizusetzenden Gase auf.

Weitere vorteilhafte Eigenschaften, Aspekte und Merkmale der vorliegenden Erfindung ergeben sich aus der folgenden Beschreibung eines in den Figuren dargestellten Ausführungsbeispiels. Es zeigt:

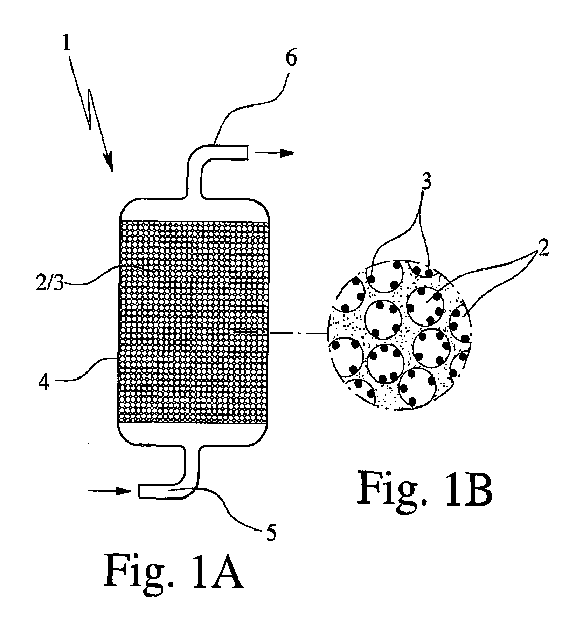

- Fig. 1A: eine schematische Schnittdarstellung durch eine erfindungsgemäße Speichereinheit für Gase gemäß einer Ausführungsform der vorliegenden Erfindung; und
- Fig. 1B: einen Vergrößenmgsausschnitt durch den Schichtaufbau der erfindungsgemäßen Speichereinheit.

Fig. 1A zeigt eine schematische Schnittdarstellung durch eine erfindungsgemäße Speichereinheit 1 für Gase entsprechend einer speziellen Ausgestaltung. Wie sich aus dem Vergrößerungsausschnitt Fig. 1B ergibt, weist die Speichereinheit 1 ein Sorptionsmittel 3 zur reversiblen Aufnahme der zu speichernden Gase auf, wobei das Sorptionsmittel 3 auf Basis diskreter Sorptionspartikel ausgebildet ist. Die Sorptionspartikel 3 sind in einen festen gasdurchlässigen dreidimensionalen Träger 2 mit Schaumstruktur eingelagert und/oder hieran fixiert.

Wie sich aus Fig. 1A weiter ergibt, weist die Speichereinheit 1 ein verschließbares, insbesondere hermetisch verschließbares Behältnis 4, insbesondere einen Tank, zur Aufnahme des mit den Sorptionspartikeln 3 beladenen Trägers 2 auf. Ferner weist die Speichereinheit 1 einen Einlaß 5 sowie einen Auslaß 6 für die Speichergase auf.

Schließlich ist ein weiterer Gegenstand der vorliegenden Erfindung die Verwendung eines festen gasdurchlässigen dreidimensionalen Trägers mit Schaumstruktur zur reversiblen Speicherung, insbesondere Sorptionsspeicherung, von Gasen, wobei der Träger mit einem Sorptionsmittel zur reversiblen Aufnahme der zu speichernden Gase beaufschlagt, insbesondere das Sorptionsmittel in den Träger eingelagert und/oder hieran fixiert, ist, wobei das Sorptionsmittel auf Basis diskreter Sorptionspartikel ausgebildet ist. In bezug auf die erfindungsgemäße Verwendung gemäß diesem Aspekt der vorliegenden Erfindung kann auf die obigen Ausführungen zu der erfindungsgemäßen Speichereinheit verwiesen werden, welche in bezug auf die erfindungsgemäße Verwendung entsprechend gelten, so daß zur Vermeidung unnötiger Wiederholung hierauf Bezug genommen werden kann.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Speichereinheit für Gase, insbesondere Sorptionsspeicher, wobei die Speichereinheit ein Sorptionsmittel zur reversiblen Aufnahme der zu speichernden Gase aufweist, wobei das Sorptionsmittel auf Basis diskreter Sorptionspartikel ausgebildet ist,
**dadurch gekennzeichnet,**
**daß** die Sorptionspartikel in einen festen gasdurchlässigen dreidimensionalen Träger mit Schaumstruktur eingelagert und/oder hieran fixiert sind.

2. Speichereinheit nach Anspruch 1, **dadurch gekennzeichnet, daß** der Träger ein offenporiger und/oder offenzelliger Schaum oder ein Schaumstoff, insbesondere ein offenporiger und/oder offenzelliger Schaumstoff, ist und/oder daß der Träger ein insbesondere offenporiger und/oder offenzelliger Schaumstoff auf Basis mindestens eines organischen Polymers, insbesondere auf Basis von Polyurethanen, Polyolefinen, Polystyrolen, Polyvinylchloriden, Polyisocyanuraten und Formaldehydharzen, besonders bevorzugt ein Polyurethanschaumstoff, ist.

3. Speichereinheit nach einem oder mehreren der vorangehenden Ansprüche, **dadurch gekennzeichnet, daß** der Träger nach seiner Beladung mit den Sorptionspartikeln komprimiert ist, insbesondere um das 1,2fache bis 3,0fache seines Ausgangsvolumens, und/oder daß der Träger ein komprimierbarer Schaum oder Schaumstoff, insbesondere ein Weichschaumstoff, vorzugsweise ein Polyurethanschaumstoff, ist, der nach seiner Beladung mit den Sorptionspartikeln komprimiert ist, insbesondere um das 1,2fache bis 3,0fache seines Ausgangsvolumens, insbesondere wobei der komprimierte Zustand des Trägers, insbesondere Schaums oder Schaumstoffs, durch einen Behälter aufrechterhalten wird und/oder insbesondere wobei der komprimierte Zustand des Trägers, insbesondere Schaums oder Schaumstoffs, durch nachfolgende Aushärtung, insbesondere thermische und/oder chemische Aushärtung, aufrechterhalten wird.

4. Speichereinheit nach Anspruch 3, **dadurch gekennzeichnet, daß** der Schaum oder Schaumstoff mit einem chemischen Aushärtungsmittel getränkt und nachfolgend ausgehärtet ist, insbesondere wobei das Aushärtungsmittel ein Klebstoff oder eine anderweitige Haftmasse ist, welche gleichermaßen zur Fixierung der Sorptionspartikel dient.

5. Speichereinheit nach einem oder mehreren der vorangehenden Ansprüche, **dadurch gekennzeichnet, daß** die Sorptionspartikel mittels einer Haftmasse, insbesondere eines Klebstoffs, an den Träger fixiert sind und/oder daß die Sorptionspartikel Poren zur reversiblen Aufnahme und/oder Speicherung von Gasen aufweisen und/oder daß die Sorptionspartikel geeignet sind, die zu speichernden Gase reversibel zu adsorbieren und/oder absorbieren, vorzugsweise zu adsorbieren, und bedarfsweise, insbesondere temperaturabhängig, wieder freizusetzen, insbesondere zu desorbieren.

6. Speichereinheit nach einem oder mehreren der vorangehenden Ansprüche, **dadurch gekennzeichnet, daß** die Sorptionspartikel eine poröse Struktur aufweisen und/oder daß die Sorptionspartikel kernförmig, insbesondere kugelförmig, ausgebildet sind, insbesondere wobei der mittlere Partikeldurchmesser im Bereich von 0,01 bis 2,0 mm, insbesondere 0,05 bis 1,0 mm, vorzugsweise 0,1 bis 1,0 mm, liegt, und/oder daß das Sorptionsmittel ausgewählt ist aus der Gruppe von Aktivkohle; Zeolithen; anorganischen Oxiden, insbesondere Siliciumdioxiden, Silicagelen und Aluminiumoxiden; Molekularsieben; mineralischen Granulaten; Klathraten; sowie deren Mischungen und besonders bevorzugt Aktivkohle ist.

7. Speichereinheit nach einem oder mehreren der vorangehenden Ansprüche, **dadurch gekennzeichnet, daß** das Sorptionsmittel, insbesondere die Aktivkohle, eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweist und/oder daß das Sorptionsmittel, insbesondere die Aktivkohle, eine spezifische Oberfläche (BET-Oberfläche) von 500 bis 2.500 m²/g, insbesondere 750 bis 2.250 m²/g, vorzugsweise 900 bis 2.000 m²/g, besonders bevorzugt 1.000 bis 1.750 m²/g, aufweist und/oder daß die Sorptionspartikel, insbesondere die Aktivkohlepartikel, vorzugsweise die Aktivkohlekömer oder Aktivkohlekügelchen, einen Berstdruck von mindestens 5 Newton, insbesondere einen Berstdruck im Bereich von 5 Newton bis 20 Newton, pro Partikel aufweisen.

8. Speichereinheit nach einem oder mehreren der vorangehenden Ansprüche, **dadurch gekennzeichnet, daß** das Sorptionsmittel Aktivkohle mit einem großen Mikroporenvolumenanteil, bezogen auf das Gesamtporenvolumen des Sorptionsmittels, ist und/oder daß das Sorptionsmittel Aktivkohle in Form von Aktivkohlekörnern, vorzugsweise Aktivkohlekügelchen, insbesondere mit mittleren Teilchendurchmessern im Bereich von 0,01 bis 2,0 mm, insbesondere 0,05 bis 1,0 mm, vorzugsweise 0,1 bis 1,0 mm, ist.

9. Speichereinheit nach einem oder mehreren der vorangehenden Ansprüche, **dadurch gekennzeichnet, daß** das Sorptionsmittel Aktivkohle mit einem Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, ist und/oder daß das Sorptionsmittel Aktivkohle mit einem Adsorptionsvolumen V_{ads} von 250 bis 1,000 cm³/g, insbesondere 300 bis 900 cm³/g, vorzugsweise 350 bis 750 cm³/g, ist.

10. Speichereinheit nach einem oder mehreren der vorangehenden Ansprüche, **dadurch gekennzeichnet, daß** das Sorptionsmittel Aktivkohle mit einem Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, ist und/oder daß das Sorptionsmittel Aktivkohle mit einem Gesamtporenvolumen nach Gurvich von 0,50 bis 0,90 cm³/g, insbesondere 0,55 bis 0,85 cm³/g, vorzugsweise 0,60 bis 0,80 cm³/g, besonders bevorzugt 0,65 bis 0,80 cm³/g, ganz besonders bevorzugt 0,70 bis 0,75 cm³/g, ist.

11. Speichereinheit nach einem oder mehreren der vorangehenden Ansprüche, **dadurch gekennzeichnet, daß** das Sorptionsmittel Aktivkohle mit einem Anteil des Mikroporenvolumens, bezogen auf das Gesamtporenvolumen der Aktivkohle, von mindestens 60 %, insbesondere mindestens 65 %, bevorzugt mindestens 70 %, ist.

12. Speichereinheit nach einem oder mehreren der vorangehenden Ansprüche, **dadurch gekennzeichnet, daß** das Sorptionsmittel Aktivkohle mit einem aus Poren mit Porendurchmessern von ≤ 25 Å, vorzugsweise ≤ 20 Å, gebildeten Mikroporenvolumenanteil von mindestens 60 %, insbesondere mindestens 65 %, bevorzugt mindestens 70 %, bezogen auf das Gesamtporenvolumen, ist und/oder daß das Sorptionsmittel Aktivkohle mit einem Mikroporenvolumen, insbesondere einem aus Poren mit Porendurchmessern von ≤ 25 Å, vorzugsweise ≤ 20 Å, gebildeten Mikroporenvolumen, nach Carbon Black von mindestens 0,40 cm³/g, insbesondere mindestens 0,45 cm³/g, vorzugsweise mindestens 0,50 cm³/g, ist.

13. Speichereinheit nach einem oder mehreren der vorangehenden Ansprüche, **dadurch gekennzeichnet, daß** das Sorptionsmittel Aktivkohle mit einem spezifischen Mikroporenoberflächenanteil, insbesondere einem aus Poren mit Porendurchmessern von ≤ 25 Å, vorzugsweise ≤ 20 Å, gebildeten spezifischen Mikroporenoberflächenanteil, von mindestens 70 %, insbesondere mindestens 75 %, bevorzugt mindestens 80 %, ganz besonders mindestens 85 %, bezogen auf das spezifische Gesamtoberfläche (BET) der Aktivkohle, ist.

14. Speichereinheit nach einem oder mehreren der vorangehenden Ansprüche, **dadurch gekennzeichnet, daß** das Sorptionsmittel Aktivkohle mit einer Mikroporenoberfläche nach Carbon Black, insbesondere einer aus Poren mit Porendurchmessern von ≤ 25 Å, vorzugsweise ≤ 20 Å, gebildete Mikroporenoberfläche, von mindestens 400 m²/g, insbesondere mindestens 800 m²/g, vorzugsweise mindestens 1.000 m²/g, besonders bevorzugt mindestens 1,200 m²/g, ist.

15. Speichereinheit nach einem oder mehreren der vorangehenden Ansprüche, **dadurch gekennzeichnet, daß** das Sorptionsmittel Aktivkohle mit einem mittleren Porendurchmesser (Durchschnittsporendurchmesser) von höchstens 35 Å, vorzugsweise höchstens 30 Å, besonders bevorzugt höchstens 25 Å, ist und/oder daß das Sorptionsmittel ein Sorptionsmittel, insbesondere Aktivkohle, mit einer Rohdichte im Bereich von 700 bis 975 g/cm³, insbesondere 750 bis 950 g/cm³, vorzugsweise 800 bis 900 g/cm³, und/oder mit einer Gesamtporosität von 40 bis 70 %, insbesondere 45 bis 65 %, vorzugsweise 50 bis 60 %, ist.

16. Speichereinheit nach einem oder mehreren der vorangehenden Ansprüche, **dadurch gekennzeichnet, daß** das Sorptionsmittel Aktivkohle mit einem spezifischen Gesamtporenvolumen im Bereich von 0,1 bis 2,5 cm³/g, insbesondere 0,2 bis 2,0 cm³/g, vorzugsweise 0,3 bis 1,5 cm³/g, besonders bevorzugt 0,4 bis 1,0 cm³/g, ist, insbesondere wobei der Anteil an Poren mit Porendurchmessern ≤ 36 Å mindestens 65 %, insbesondere mindestens 70 %, vorzugsweise mindestens 75 %, und bis zu 95 %, insbesondere bis zu 90 %, beträgt.

17. Speichereinheit nach einem oder mehreren der vorangehenden Ansprüche, **dadurch gekennzeichnet, daß** der Träger das Sorptionsmittel, insbesondere die Aktivkohle, in einer Beladungsmenge von 0,01 bis 1 g/cm³, vorzugsweise 0,1 bis 0,6 g/cm³, enthält.

18. Verwendung einer Speichereinheit nach einem oder mehreren der vorangehenden Ansprüche zur reversiblen Speicherung von Gasen, insbesondere brennbaren Gasen oder Heizgasen, insbesondere Erdgas, Wasserstoff, Kohlenwasserstoffgasen, wie Methan und Ethan, oder dergleichen.

19. Verwendung einer Speichereinheit nach einem oder mehreren der vorangehenden Ansprüche als Energiespeicher, insbesondere Gasspeicher, für Kraftfahrzeuge, Verbrennungsmotoren und Kraftwerke.

20. Verwendung eines festen gasdurchlässigen dreidimensionalen Trägers mit Schaumstruktur zur reversiblen Speicherung, insbesondere Sorptionsspeicherung, von Gasen, wobei der Träger mit einem Sorptionsmittel zur reversiblen Aufnahme der zu speichernden Gase beaufschlagt ist, insbesondere das Sorptionsmittel in den Träger eingelagert und/oder hieran fixiert ist, wobei das Sorptionsmittel auf Basis diskreter Sorptionspartikel ausgebildet ist.
